Europäisches Patentamt

European Patent Office

Office européen des brevets

(11) Veröffentlichungsnummer: **0 400 181 A1**

## EUROPÄISCHE PATENTANMELDUNG

(21) Anmeldenummer: **89109862.6**

(22) Anmeldetag: **31.05.89**

(51) Int. Cl.5: **B60T 3/00, B60R 11/06**

(43) Veröffentlichungstag der Anmeldung:
**05.12.90 Patentblatt 90/49**

(84) Benannte Vertragsstaaten:
**AT BE CH DE ES FR GB IT LI NL SE**

(71) Anmelder: **Danner, Lutz**
**Jägerstrasse 7**
**D-3013 Barsinghausen(DE)**

(72) Erfinder: **Danner, Lutz**
**Jägerstrasse 7**
**D-3013 Barsinghausen(DE)**

(74) Vertreter: **Seibert, Rudolf, Dipl.-Ing. et al**
**Rechtsanwälte Seibert & Partner**
**Tattenbachstrasse 9**
**D-8000 München 22(DE)**

(54) **Verfahren zur Herstellung eines Bremsklotzes und Bremsklotz mit zugehöriger Halterung.**

(57) Ein Verfahren zur Herstellung eines Bremsklotzes sieht in einem ersten Verfahrensschritt vor, einen Strang 3 aus einem nichtrostenden Leichtmetall mit einem bremsklotzförmigen Querschnitt 1 zu erzeugen. Anschließend wird in einem zweiten Verfahrensschritt der Strang 3 in mehrere Teile mit einer vorgegebenen Breit geteilt. Die Teile ergeben dabei den fertigen Bremsklotz. Vorteil des Verfahrens ist es, daß auf weitere, aufwendige Verfahrensschritte, wie z.B. das Anpassen von Seitenteilen und deren Befestigung, verzichtet werden. Ein weiterer Vorteil besteht darin, daß der Strang 3 mit Ausgestaltungen, wie beispielsweise Zackenreihen 9 an der Standfläche 7 oder eine gebogene Auswölbung an der rückwärtigen Fläche 13 versehen werden kann. Die Ausgestaltungen dienen am fertigen Bremsklotz als Rutschsicherung bei glattem Untergrund bzw. als Griffleiste zur leichten Handhabung des Bremsklotzes. Aufgrund der fehlenden Seitenteile und des verwendeten Leichtmetalls ist der Bremsklotz sehr leicht. Weiterhin ist eine Halterung angegeben, mit welcher der Bremsklotz auf einfache Weise an einem Fahrzeug befestigt werden kann. Die Halterung 30 besteht im wesentlichen aus einem Stahlblech, welches im unteren Bereich mit einer Aufnahmekerbe 32 für die Kante 11 des Bremsklotzes und im oberen Bereich mit einer Gegenfeder 34 versehen ist, die in eine Nut 15 am Bremsklotz einrasten kann.

## Verfahren zur Herstellung eines Bremklotzes und Bremsklotz mit zugehöriger Halterung

Die Erfindung bezieht sich auf ein Verfahren zur Herstellung eines Bremsklotzes zur Sicherung eines abgestellten Fahrzeugs gegen Rollen. Sie bezieht sich weiterhin auf einen Bremsklotz mit zugehöriger Halterung.

Aus dem täglichen Erscheinungsbild des Straßenverkehrs sind Bremsklötze oder Hemmschuhe bekannt, die ein geparktes Fahrzeug gegen Wegrollen sichern. Solche Bremsklötze weisen einen im wesentlichen dreieckförmigen Querschnitt auf, wobei zwei Flächen des Bremsklotzes eben ausgebildet sind und die dritte Fläche eine Wölbung nach innen aufweist, die in etwa der Größe des Reifens des zu sichernden Fahrzeugs entspricht. Von den ebenen Flächen dient die größere als Standfläche, die auf den Untergrund, z.B. die Fahrbahn aufgesetzt wird und die kürzere weist in der Regel ein Griffelement auf.

Die Bremsklötze sind aus Stahlblech gefertigt, welches entweder grundiert oder feuerverzinkt ist. Sie besitzen einen Grundrahmen und zwei in diesem Querschitt angepaßte dreieckförmige Seitenteile, die in einem separaten Arbeitsgang, wie z.B. Schweißen, angebracht werden müssen. Dieses bedeutet fertigungstechnisch eine gewisse Schwierigkeit, da die in das Profil des Bremsklotzes passenden Seitenteile genau gefertigt werden müssen, und die Verbindung der Seitenteile zu dem Grundrahmen des Bremsschuhes eine gute Festigkeit aufweisen muß.

Aufgabe der Erfindung ist es daher, ein Verfahren zur Herstellung eines Bremsklotzes anzugeben, bei welchem auf die Anpassung und Anbringung eines Seitenteils verzichtet werden kann. Weiterhin ist es Aufgabe der Erfindung, einen nach dem Verfahren hergestellten Bremsklotz, und eine Halterung zur Fixierung des Bremsklotzes anzugeben.

Bezüglich des Verfahrens wird die Aufgabe erfindungsgemäß dadurch gelöst, daß in einem ersten Verfahrensschritt ein Strang aus einem nichtrostenden Leichtmetall mit einem bremsklotzförmigen Querschnitt erzeugt wird, wobei der Strang in seinem Inneren mit längslaufenden Unterstützungsrippen zur Versteifung des Strangprofils versehen wird, und daß der Strang in einem zweiten Verfahrensschritt in mehrere, die Bremsklötze ergebende Teile mit einer vorgegebenen Breite geteilt wird.

Vorteil des Verfahrens ist es, daß nach dem Teilungsschritt bereits die fertigen Bremsklötze vorliegen. Es brauchen keine Seitenteile in einem weiteren Verfahrensschritt angebracht zu werden. Die notwendige, von der zuständigen Norm vorgeschriebene Steifigkeit wird durch die Unterstützungsrippen gewährleistet, die gleichzeitig mit dem ersten Verfahrensschritt, also dem Pressen des Stranges, gefertigt werden. Zum Teilen des Stranges in die einzelnen Bremsklötze können die bekannten Trennungsverfahren, wie beispielsweise Sägen oder Durchschneiden mit einer Trennscheibe angewendet werden.

Eine besonders vorteilhafte Ausgestaltung des Verfahrens zeichnet sich dadurch aus, daß der Strang mit einer in Längsrichtung verlaufenden gebogenen Auswölbung, die als Griffleiste dient, versehen wird. Dadurch ist es möglich, nicht nur einen funktionsgerechten Bremsklotz in lediglich zwei Arbeitsschritten herzustellen, sondern ihn auch noch mit einer die Handhabung erleichternden Griffmöglichkeit zu versehen.

Ein Bremsklotz, der nach dem zuvorgenannten Verfahren hergestellt wurde, zeichnet sich erfindungsgemäß dadurch aus, daß er seitlich offen ist. Hier ist als wesentlicher Vorteil eine Gewichtseinsparung zu nennen, die dadurch zustande kommt, daß lediglich noch einige wenige Unterstützungsrippen im Inneren des Bremsklotzes nötig sind, anstelle einer kompletten seitlichen Verkleidung. Zur Gewichtseinsparung trägt weiterhin bei, daß der Bremsklotz aus einem Leichtmetall, beispielsweise einer Aluminium-Legierung, vorzugsweise im Strangpressverfahren gefertigt wird.

Gemäß einer ersten Ausführungsform zeichnet sich eine Halterung zur Fixierung des Bremsklotzes erfindungsgemäß dadurch aus, daß sie aus einem Metallblech besteht, welches am unteren Rand eine Aufnahmekerbe für die Kante der spitz zulaufenden Flächen des Bremsklotzes aufweist, daß im oberen Bereich ein Stift mit einem Stiftkopf in einem vorgegebenen Abstand zur Aufnahmekerbe angebracht ist, und daß im Bereich zwischen dem Stift und der Aufnahmekerbe ein flaches Federelement angeordnet ist. Bei dieser Halterung ist es lediglich nötig, den Bremsklotz etwas in die Kerbe einzuführen und den Stiftkopf mit der Vergrößerung am Langloch in der Standfläche des Bremsschuhes in Deckung zu bringen, den Bremsklotz anzudrücken und abzusenken. Durch das Langloch ist der Bremsschuh an einem seitlichen Verrutschen verhindert. Als Auflage dient die Kerbe, und das Federelement verhindert ein Hochrutschen des Bremsklotzes bei Erschütterungen des Fahrzeugs in senkrechter Richtung. Zusätzlich ist auch eine Sicherung mit Stift und zugeordneter Durchführung möglich.

Gemäß einer zweiten Ausführungsform zeichnet sich eine Halterung zur Fixierung des Bremsklotzes erfindungsgemäß dadurch aus, daß sie aus einem Metallblech oder ebenfalls aus einem Strangpressprofil aus einer Aluminiumlegierung besteht, welches am unteren Rand eine Aufnahmekerbe für die Kante der spitz zulaufenden Flächen des Bremsklotzes und am oberen Rand eine in Verbindung mit der Nut eine Klemmverbindung herstellende Gegenfeder aufweist. Die im Bremsklotz vorhandene Nut ist bei der Herstellung des Strangs bereits mitberücksichtigt. Vorteil der Halterung ist es, daß sie mit einfachen Handgriffen die Befestigung des Bremsklotzes erlaubt. Dieser wird lediglich in die Kerbe eingesetzt und mit einem gewissen Druck zu Überwindung der Federkraft gegen die Halterung gedrückt. Nach dem Einschnappen der Gegenfeder ist der Bremsklotz sicher gehalten.

Bei Fertigung der Halterung im Strangpressverfahren kann jede einzelne Halterung durch Absägen vom Strangpressprofil hergestellt werden. Es wird etwas breiter als der Bremsklotz hergestellt und dann vorzugsweise mit den Schrauben mit großem Kopf an dem LKW-Chassis befestigt, so daß ein seitliches Herausrutschen des Bremsklotzes verhindert wird.

Weitere Vorteile und Ausgestaltungen der Erfindung ergeben sich aus der Beschreibung von Ausführungsbeispielen anhand der Figuren. Es zeigen:

Figur 1: einen Querschnitt durch einen bremsklotzförmig profilierten Strang,

Figur 2: eine erste Ausführungsform einer Halterung für einen Bremsklotz und

Figur 3: eine zweite Ausführungsform einer Halterung für den Bremsklotz aus einem Strangpressprofil.

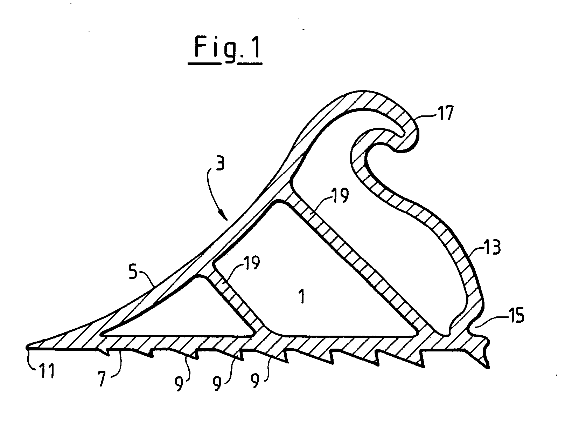

In Figur 1 ist ein Querschnitt 1 eines Stranges 3 dargestellt, wie er in einem Strangpressverfahren gewonnen werden kann. Der Strang 3 weist ein bremsklotzförmiges Profil auf. Bremsklotzförmig bedeutet dabei, daß eine Fläche des Stranges 3 mit einer Wölbung 5 versehen ist, die an die Reifengröße eines zu sichernden Fahrzeugs ungefähr angepaßt ist. Bei dem Fahrzeug kann es sich dabei beispielsweise um einen Lastkraftwagen, einen Auflieger, einen Anhänger oder einen Wohnwagen handeln, also alles Fahrzeuge, bei denen die Mitführung eines Bremsklotzes gesetzlich vorgeschrieben ist. Für unterschiedliche Reifengrößen sind unterschiedliche Wölbungen 5 zu wählen, wobei eine Wölbungsgröße für mehrer Reifengrößen zulässig sein kann. Für jede Wölbungsgröße muß ein getrennter Strang 3 hergestellt werden. Unter bremsklotzförmig wird weiterhin verstanden, daß eine Standfläche 7 vorgesehen ist, mit welcher der fertige Bremsklotz oder Hemmschuh auf die Straße oder den vorhandenen Untergrund platziert werden kann. Die Standfläche 7 ist vorzugsweise mit einem scharfkantigen Profil versehen, welches, wie in Figur 1 gezeigt, die Form von Zackenreihen 9 oder alternativ hierzu eine Riffelung darstellen kann. Die Zackenreihen 9 verlaufen dabei in Richtung des Stranges 3. Durch das scharfkantige Profil wird ein Verrutschen des Bremsklotzes auch bei öliger Straße oder bei winterlichen Straßenbedingungen, wie beispielsweise einem Eisoder Schneebelag, verhindert.

Die Fläche mit der Wölbung 5 und die Standfläche 7 laufen spitz aufeinander zu und bilden eine Kante 11. Am freien Ende sind die Fläche mit der Wölbung 5 und die Standfläche 7 durch eine rückwärtige Fläche 13 verbunden, so daß der bremsklotzförmige Querschnitt 1 im wesentlichen dreieckförmig ist.

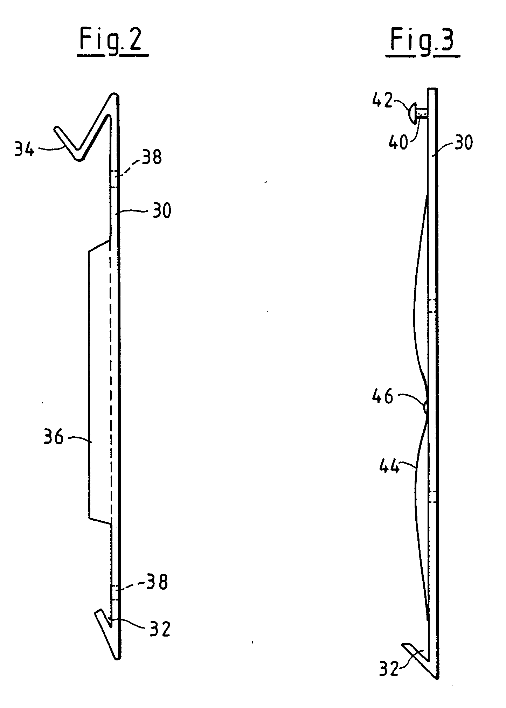

Die rückwärtige Fläche 13 ist mit einer in Längsrichtung oder Strangrichtung verlaufenden Nut 15 versehen. Die Nut 15 verläuft dicht an der Standfläche 7 und dient zur Aufnahme einer Gegenfeder von einer Halterung, wie später anhand der Figur 2 erläutert wird. Die rückwärtige Fläche 13 weist weiterhin eine gebogene Auswölbung 17 auf, die als Griffleiste zum leichteren Herausziehen und Hereinstecken des Bremsklotzes dient.

Im Inneren des Stranges 3 verlaufen, wie aus dem Querschnitt 1 ersichtlich, Unterstützungsrippen 19, die zwischen der Fläche mit der Wölbung 5 und der Standfläche 7 verlaufen. Die Unterstützungsrippen 19 übertragen eine auf die Fläche mit der Wölbung 5 ausgeübte Kraft auf die Standfläche 7. Die Anzahl und die Dicke der Unterstützungsrippen 19 richtet sich nach der Größe des Bremsklotzes und nach den vorgeschriebenen statischen Belastungen, die dieser ohne Verformung widerstehen muß.

Das Material aus dem der Strang 3 gefertigt ist, ist vorzugsweise eine Aluminium-Legierung. Dadurch kann der Strang 3 relativ einfach im Strangpressverfahren hergestellt werden und weist gleichzeitig den Vorteil eines geringen Gewichts auf.

Der Strang 3 wird mit dem dargestellten bremsklotzförmigen Querschnitt 1 in gut handhabbare Längen von beispielsweise zwischen 5m und 8m in einem ersten Verfahrensschritt gefertigt. Dabei werden sämtliche Ausgestaltungen, wie beispielsweise die Zackenreihe 9, die Nut 15 und die gebogene Auswölbung 17 mit in dem Querschnitt 1 berücksichtigt. Anschließend wird in einem zweiten Verfahrensschritt der Strang 3 in vorgegebene Längen geteilt, die der Breite des gewünschten Bremsklotzes entsprechen. Nach dem Teilungsvorgang liegt der fertige Bremsklotz vor. Möglicherweise ist je nach verwendeter Trennungsart noch eine Nachbehandlung der Trennkanten nötig, um diese zu entgraten. Der so hergestellte Bremsklotz ist seitlich offen. Dies hat den Vorteil, daß keine Seitenteile nötig sind, und die Schwierigkeiten, diese genau dem Querschnitt 1 anzupassen und in einem weiteren Verfahrensschritt anzubringen, wegfallen. Die von den sonst vorhandenen Seitenteilen von der Wölbung 5 auf die Standfläche 7 übertragene Kraft wird im vorliegenden Bremsklotz durch die Unterstützungsrippen 19, die in Längsrichtung des Strangs 3 verlaufen, übertragen.

Je nach dem gewünschten Komfort bei der Handhabung des Bremsklotzes ist es angebracht, in einem dritten Verfahrensschritt am linken und rechten Rand die gebogene Auswölbung 17 abzutragen, so daß ein ungefähr mittig platzierter Teil der Auswölbung 17 als Haltegriff bestehen bleibt. Alternativ hierzu ist es auch möglich auf, die gebogene Auswölbung 17 völlig zu verzichten und einen separaten Haltegriff in einem weiteren Verfahrensschritt an den Bremsklotz anzubringen.

In Figur 2 ist eine erste Ausführungsform einer Halterung 30 gezeigt, die zur Fixierung des zuvor beschriebenen Bremsklotzes dient. Die Halterung 30 besteht im wesentlichen aus einem Metallblech, welches am unteren Rand eine Aufnahmekerbe 32 für die Kante 11 der spitz zulaufenden Flächen des Bremsklotzes aufweist. Am oberen Rand ist das Stahlblech mit einer Gegenfeder 34 versehen, die in Verbindung mit der Nut 15 des Bremsklotzes eine Klemmverbindung herstellt. Die Halterung 30 umfaßt weiterhin zwei seitliche Begrenzungselemente 36, die den festgeklemmten Bremsklotz gegen ein seitliches Verrutschen sichern. Die Begrenzungselemente 36 können hochgebogene Laschen des Metallblechs sein oder aber einzelne Stifte. Alternativ hierzu ist es möglich, die Halterung 30 etwas breiter als den Bremsklotz auszulegen und an dem über den festgeklemmten Bremsklotz seitlich herausragenden Blechteilen Bohrungen vorzusehen, mit deren Hilfe die Halterung mittels Maschienenschrauben an das Fahrzeug befestigt werden kann. Die Köpfe der Maschienenschrauben dienen dann gleichzeitig als Begrenzungselement 36. Ansonsten ist die Halterung 30 mit mittig liegenden Bohrungen 38 versehen, durch welche Schrauben zur Befestigung der Halterung 30 am Fahrzeug durchgeführt werden können. Der Bremsklotz wird zur Befestigung mit seiner Kante 11 in die Aufnahmekerbe 32 gesetzt und mit einem kurzen Ruck gegen die Halterung 30 gedrückt. Die Gegenfeder 34 schnappt dabei in die Nut 15 am Bremsklotz ein und sichert ihn gegen ein Herausspringen während der Fahrt.

In Figur 3 sind gleiche Teile mit gleichen Bezugszeichen versehen wie in Figur 2. Es ist eine Halterung 30 gezeigt, die im wesentlichen aus einem Metallblech besteht, das im unteren Bereich eine Aufnahmekerbe 32 aufweist. Die Aufnahmekerbe 32 ist bezüglich ihres Winkels an die Kante 11 des Bremsklotzes angepaßt. Im oberen Bereich der Halterung 30 ist mittig ein Stift 40 vorgesehen, der einen verdickten Stiftkopf 42 aufweist. Der Stiftkopf 40 befindet sich in einem fest vorgegebenen Abstand zur Aufnahmekerbe 32. Der Abstand richtet sich dabei nach demjenigen zwischen der Kante 11 und der Vergrößerung oder Ausweitung am Ende eines Langlochs in der Standfläche 7 des Bremsklotzes. Im Bereich zwischen dem Stift 40 und der Aufnahmekerbe 32 ist ein flaches Federelement 44 angebracht. Das Federelement 44 ist beispielsweise eine Stahlfeder mit zwei Schwingen, die mittig mittels einer Niete 46 an die Halterung 30 angebracht ist. Auch hier ist die Halterung 30 mit Bohrungen versehen, durch welche Schrauben zur Fixierung der Halterung am Fahrzeug durchgeführt werden können. Jede einzelne Halterung kann einzeln aus einem Metallblech gefertigt sein oder durch Abtrennen von einem entsprechenden Strangpressprofil gewonnen sein, wobei, wie oben erwähnt, die Grundbreite größer als die Breite des Bremsklotzes gewählt werden sollte.

Zur Fixierung des Bremsklotzes in der Halterung 30 wird dieser mit seiner Kante 11 am oberen Rand der Aufnahmekerbe 32 angesetzt. Dann wird er gegen die Halterung 30 gedrückt, so daß seine in der Standfläche 7 befindliche Öffnung oder Ausweitung des Langlochs über den Stiftkopf 42 geführt wird. Dann wird der Bremsklotz bei Führung in dem Langloch abgesenkt, bis seine Kante 11 fest in der Aufnahmekerbe 32 sitzt. Vorteil dieser Halterung ist es, daß keine weiteren seitlichen Fixierungsmittel vorgesehen werden brauchen. Der Stift 40 sichert den Bremsklotz sowohl gegen seitliche Verschiebungen, als auch gegen ein Abheben von der Halterung 30. Ein Verrutschen des Bremsklotzes nach unten wird durch die Aufnahmekerbe 32 verhindert und ein mögliches, durch Erschütterungen hervorgerufenes Hochspringen des Bremsklotzes wird durch das flache Federlemement 44 verhindert.

## Ansprüche

1. Verfahren zur Herstellung eines Bremsklotzes zur Sicherung eines abgestellten Fahrzeuges gegen Rollen, dadurch gekennzeichnet, daß in einem ersten Verfahrensschritt ein Strang 3 aus einem nichtrostenden Leichtmetall mit einem bremsklotzförmigen Querschnitt 1 erzeugt wird, wobei der Strang 3 in seinem Inneren mit Unterstützungsrippen 19 zur Versteifung des Strangprofils versehen wird, und daß der Strang 3 in einem zweiten Verfahrensschritt in mehrere, die Bremsklötze ergebende Teile mit einer vorgegebenen Breite geteilt wird.

2. Verfahren nach Anspruch 1, dadurch gekennzeichnet, daß der Strang 3 mit einer in Längsrichtung verlaufenden, gebogenen Auswölbung 17, die als Griffleiste dient, versehen wird.

3. Verfahren nach Anspruch 2, dadurch gekennzeichnet, daß die Auswölbung 17 in einem dritten Verfahrensschritt am linken und rechten Rand teilweise abgetragen wird, so daß ein ungefähr mittig platzierter Teil der Auswölbung 17 als Haltegriff bestehen bleibt.

4. Verfahren nach einem der Ansprüche 1 bis 3, dadurch gekennzeichnet, daß der Strang 3 an seiner als Standfläche 7 des Bremsklotzes dienenden Seite mit einem scharfkantigen Profil versehen wird.

5. Verfahren nach Anspruch 4, dadurch gekennzeichnet, daß das Profil aus in Strangrichtung verlaufenden Zackenreihen 9 oder aus einer Riffelung besteht.

6. Verfahren nach einem der Ansprüche 1 bis 5, dadurch gekennzeichnet, daß der Strang 3 mit einer in Längsrichtung verlaufenden Nut 15 versehen wird, die zur Aufnahme eines Klemmteils 34, einer Halterung 30 für den Bremsklotz dient.

7. Verfahren nach einem der Ansprüche 1 bis 6, dadurch gekennzeichnet, daß als Leichtmetall eine Aluminium-Legierung verwendet wird.

8. Bremsklotz hergestellt nach dem Verfahren gemäß einem der Ansprüche 1 bis 7, dadurch gekennzeichnet, daß er seitlich offen ist.

9. Bremsklotz nach Anspruch 8, dadurch gekennzeichnet, daß seine Standfläche 7 mit einem Langloch versehen ist, das an einem Ende eine Vergrößerung zur Durchführung eines Stiftkopfes 32 aufweist.

10. Halterung zur Fixierung eines Bremsklotzes gemäß Anspruch 9 an einem Fahrzeug, dadurch gekennzeichnet, daß sie aus einem Metallblech besteht, welches am unteren Rand eine Aufnahmekerbe 32 für die Kante 11 der spitz zulaufenden Flächen des Bremsklotzes aufweist, daß im oberen Bereich ein Stift 40 mit einem Stiftkopf 42 in einem vorgegebenen Abstand zur Aufnahmekerbe 32 angebracht ist, und daß im Bereich zwischen dem Stift 40 und der Aufnahmekerbe 32 ein flaches Federelement 44 angeordnet ist.

11. Halterung zur Fixierung eins Bremsklotzes, der gemäß Anspruch 6 hergestellt wurde, dadurch gekennzeichnet, daß sie aus einem Metallprofilabschnitt (Strangpressprofil) besteht, welches am unteren Rand eine Aufnahmekerbe 32 für die Kante 11 der spitz zulaufenden Flächen des Bremsklotzes und am oberen Rand eine, in Verbindung mit der Nut 15 eine Klemmverbindung herstellende Gegenfeder 34 aufweist.

12. Halterung nach Anspruch 10 oder 11, dadurch gekennzeichnet, daß das Metallblech oder Metallprofilabschnitt breiter als der Bremsklotz ist und an seinem Rand mit Löchern zur Durchführung von Befestigungsmitteln versehen ist.

## Fig.1

## Fig.2

34 — 38

30

36 —

38

32

## Fig.3

42 —
40 —    30

46

44

32

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 002 809 (M.A.N.)<br>* Insgesamt *<br>--- | 1,2,4,5,8 | B 60 T 3/00<br>B 60 R 11/06 |
| A | US-A-4 399 893 (SWITZER)<br>* Insgesamt *<br>--- | 1,4,8 | |
| A | DE-U-8 512 693 (REINHARDT)<br>* Seite 2, Zeilen 1-16; Figuren 1,2 *<br>--- | 10,12 | |
| A | BE-A- 764 004 (WIHAG)<br>----- | 10 | |

| | RECHERCHIERTE SACHGEBIETE (Int. Cl.5) |
|---|---|
| | B 60 T<br>B 60 R<br>B 60 P |

Der vorliegende Recherchenbericht wurde für alle Patentansprüche erstellt

| Recherchenort | Abschlußdatum der Recherche | Prüfer |
|---|---|---|
| DEN HAAG | 18-01-1990 | HARTEVELD C.D.H. |